# EUROPÄISCHE PATENTSCHRIFT

(11) **EP 2 376 243 B1**
(45) Veröffentlichungstag und Bekanntmachung des Hinweises auf die Patenterteilung: **13.02.2013**
(21) Anmeldenummer: 09799025.3
(22) Anmeldetag: 11.12.2009
(51) Int. Cl.: B22D 11/18, G01F 1/56, G01F 1/58, G05D 9/12

(54) **VORRICHTUNG ZUR DETEKTION DES DURCHFLUSSES UND VERFAHREN HIERFÜR**
DEVICE FOR DETECTING THE FLOW AND METHOD THEREFOR
DISPOSITIF DE DÉTECTION DU DÉBIT, ET PROCÉDÉ CORRESPONDANT

(30) Priorität: 11.12.2008 DE 102008061292
(43) Veröffentlichungstag der Anmeldung: 19.10.2011
(73) Patentinhaber: SMS Siemag AG, 40237 Düsseldorf (DE)
(72) Erfinder: VOGL, Norbert, 40883 Ratingen (DE); BAUSCH, Jörg, 40629 Düsseldorf (DE); WANS, Jochen, 40667 Meerbusch (DE); LIEFTUCHT, Dirk, 48739 Legden (DE)
(74) Vertreter: Klüppel, Walter
(86) Internationale Anmeldenummer: PCT/EP2009/008887
(87) Internationale Veröffentlichungsnummer: WO 2010/066447

(56) Entgegenhaltungen:
- WO-A2-2005/053877
- JP-A- 7 132 349
- JP-A- 7 181 195
- JP-A- 7 195 159

## Beschreibung

### Technisches Gebiet

Die Erfindung betrifft eine Vorrichtung zur Detektion des Durchflusses von flüssigen Metallen insbesondere in Gießanlagen nach dem Oberbegriff von Anspruch 1 und ein Verfahren zur Steuerung oder Regelung eines Füllstands aufgrund der Detektion des Durchflusses nach Anspruch 7.

### Stand der Technik

Der Durchfluss von flüssigen Metallen durch metallurgische Gefäße und insbesondere die diesbezüglichen Durchflussmengen sind in Gießanlagen insbesondere zur Prozesssteuerung und damit auch für die Qualität des Endprodukts von zunehmender Bedeutung.

Heute wird der Durchfluss bzw. die Durchflussmenge durch metallurgische Gefäße in Gießanlagen indirekt durch Wiegen von Gefäßen oder durch die Messung der Abzugsgeschwindigkeit und der Dicke des Gussproduktes bestimmt. Diese Verfahren sind allerdings nur relativ ungenau oder sie sind mit großen Toleranzen behaftet und genügen daher den immer weiter steigenden Anforderungen an die Qualität der Regelung immer weniger.

Darüber hinaus sind elektromagnetische Fließgeschwindigkeitssensoren durch die JP 7181195 bekannt geworden, welche die Fließgeschwindigkeit einer heißen Metallschmelze in Echtzeit messen können, wobei eine magnetische Substanz und ein magnetischer Aufnehmer verwendet werden, wobei die magnetische Substanz auf der Oberfläche des heißen geschmolzenen Metalls aufgebracht wird. Dies zeigt sich in der Praxis einer Gießanlage als weniger praktikabel und teuer.

Weiterhin offenbart die JP 57199917 ein elektromagnetisches Flussmeter, bei welchem um ein durchflossenes Rohr eine Magnetspule angeordnet ist, wobei aufgrund des Gleichstroms sich ein Magnetfeld einstellt, welches auf das flüssige durchfließende Metall einwirkt und einen Kreisstrom verursacht, welcher wiederum eine Kraft verursacht, die auf die Spule wirkt und welche detektiert wird. Da die Kraft proportional zur Geschwindigkeit des Flusses ist, kann aus der Kraft auf die Geschwindigkeit geschlossen werden. Auch dies zeigt sich in der Praxis einer Gießanlage als ungeeignet, insbesondere im Hinblick auf die doch rauen äußeren Bedingungen.

Die WO 00/58695 offenbart ein Verfahren, bei welchem ein Magnetfeld ebenfalls Kreisströme verursacht, weil sich ein Metallbett und das Magnetfeld relativ zu einander bewegen. Auch dies erscheint weniger praxisgerecht, da die Produktionsanlagen erheblich umgestaltet werden müssten.

Die WO 02/36293 A1 offenbart ein Verfahren, bei welchem ein Gasgehalt zur Detektion genutzt wird. Da in typischen Metallschmelzen der Gasgehalt eher gering und eher störend ist, scheidet eine solche Vorgehensweise typischer Weise aus.

Die WO 2005/053877 A2 offenbart ein Verfahren zur Erfassung des Füllstandes eines Gefäßes mit flüssigem Metall. Die Gießspiegelhöhe des flüssigen Metalls im Gefäß wird über eine Gewichtsmesszelle erfasst und somit wird die Durchflussmenge indirekt gemessen.

### Darstellung der Erfindung, Aufgabe, Lösung, Vorteile

Es ist die Aufgabe der Erfindung, eine Vorrichtung zur Messung des Durchflusses von flüssigen

Metallen zu schaffen, welche eine höhere Genauigkeit und/oder eine schnellere Reaktion der Steuerung bzw. Regelung erlaubt. Auch ist es die Aufgabe der Erfindung ein Verfahren zur Steuerung oder Regelung eines Füllstands zumindest eines Gefäßes zu schaffen, wobei die Vorrichtung zur Detektion des Durchflusses herangezogen wird, um damit eine Produktqualität zu verbessern.

Die Aufgabe zur Vorrichtung wird erreicht mit den Merkmalen von Anspruch 1, wonach eine Vorrichtung zur Messung des Durchflusses von flüssigem Metall geschaffen wird, mit einem ersten Gefäß und mit einem zweiten Gefäß, wobei das flüssige Metall in dem ersten Gefäß bereit gestellt wird und über ein Schattenrohr in das zweite Gefäß strömt, wobei das flüssige Metall in dem zweiten Gefäß zwischengespeichert wird und über zumindest ein erstes Tauchrohr in eine Kokille oder ein weiteres Gefäß strömt, wobei die Durchflussmenge des flüssigen Metalls durch das Schattenroher und/oder das zumindest eine Tauchrohr durch zumindest einen unterhalb des jeweiligen Gefäßes angeordneten Sensor detektiert wird. Dadurch kann eine schnelle Regelung bzw. Steuerung durchgeführt werden.

Dabei ist es zweckmäßig, wenn zur Steuerung oder Regelung des Durchflusses ein Steuerelement dem jeweiligen Tauchrohr oder Schattenrohr zugeordnet ist, welches den Durchfluss durch Ansteuerung kontrollieren kann.

Auch ist es zweckmäßig, wenn sie auch unterhalb des jeweiligen Steuerelements angeordnet sind.

Weiterhin ist es vorteilhaft, wenn das zweite Gefäß unterhalb des ersten Gefäßes angeordnet ist und das Schattenrohr von dem Abfluss des ersten Gefäßes von oben in das zweite Gefäß ragt.

Ebenso ist es vorteilhaft, wenn die Kokille unterhalb des zweiten Gefäßes angeordnet ist und das Tauchrohr von dem Abfluss des zweiten Gefäßes von oben in die Kokille ragt.

Erfindungsgemäß ist es besonders vorteilhaft, wenn eine Steuerung oder Regelung vorgesehen ist bzw. durchgeführt wird, mittels welcher auf Basis der Signale des Sensors oder der Sensoren das Steuerelement oder die Steuerelemente angesteuert werden, so dass ein im Wesentlichen gleichmäßiger Füllstand der Gefäße, d.h. des ersten Gefäßes und/oder des zweiten Gefäßes und/oder der Kokille und/oder des weiteren Gefäßes, mit dem flüssigen Metall und eine gleichmäßige Produktdicke an der Kokille resultiert.

Die Aufgabe bezüglich des Verfahrens wird erreicht durch ein Verfahren zur Steuerung oder Regelung eines Füllstands zumindest eines Gefäßes mit flüssigem Metall in einer Vorrichtung mit einem ersten Gefäß (2) und mit einem zweiten Gefäß (8), wobei das flüssige Metall (3) in dem ersten Gefäß (2) bereit gestellt wird und über ein Schattenrohr (7) in das zweite Gefäß (8) strömt, und das flüssige Metall (3) in dem zweiten Gefäß (8) zwischengespeichert wird und über zumindest ein erstes Tauchrohr (17,18) in eine Kokille oder ein weiteres Gefäß (15,16) strömt, wobei weiterhin die Durchflussmenge des flüssigen Metalls (3) durch das Schattenrohr (7) und/oder durch das zumindest eine Tauchrohr (17,18) mittels zumindest eines unterhalb des jeweiligen Gefäßes (2,8) angeordneten Sensors (9,21,22) detektiert wird, und wobei auf Basis zumindest eines Signals des zumindest einen Sensors (9,21,22) zumindest ein Steuerelement (6,19,20) angesteuert wird, so dass ein im Wesentlichen gleichmäßiger Füllstand des ersten und/oder zweiten Gefäßes (2,8) und/oder ein im Wesentlichen gleichmäßiger Füllstand in der Kokille (15) oder in dem weiteren Gefäß (16) sowie eine im Wesentlichen gleichmäßige Produktdicke resultieren.

Weiterhin ist es vorteilhaft, wenn zur Steuerung oder Regelung des Durchflusses ein Steuerelement dem jeweiligen Tauchrohr oder Schattenrohr zugeordnet ist. Durch die Steuerung oder Regelung des Durchflusses kann vorteilhaft ein Flüssigkeitsspiegel beispielsweise von Stahl in einer Kokille in seinem Niveau gesteuert oder geregelt werden, um die Produktqualität am Ausgang der Kokille optimieren zu können. Besonders vorteilhaft ist die Anwendung des erfindungsgemäßen Verfahrens im Bereich des Gießens von flüssigen Metallen, wie insbesondere beim Stranggießen oder Bandgießen, so dass insbesondere auch die Vorteile des Messverfahrens zur Niveauregelung eines Metall- oder Stahlspiegels mit dem Ziel der Verbesserung der Produktqualität durch Erzielung einer kleineren Varianz des Flüssigmetallspiegelniveaus genutzt werden können.

Weiterhin ist es besonders vorteilhaft, wenn der zumindest eine Sensor unterhalb zumindest eines Steuerelements angeordnet ist.

Ebenso ist es zweckmäßig, wenn das zweite Gefäß unterhalb des ersten Gefäßes angeordnet ist und das Schattenrohr von dem Abfluss des ersten Gefäßes von oben in das zweite Gefäß ragt.

Besonders vorteilhaft ist es, wenn die Kokille unterhalb des zweiten Gefäßes angeordnet ist und das Tauchrohr von dem Abfluss des zweiten Gefäßes von oben in die Kokille und/oder das weitere Gefäß ragt.

Hinsichtlich des Verfahrens ist es weiterhin vorteilhaft, wenn die Ausregelzeit des Regelsystems dadurch minimiert wird, dass die Steigung der Kennlinie des Massenstroms als Funktion der Stopfenposition bestimmt wird. Dadurch kann die Ausregelzeit verkürzt werden ohne dass das Regelsystem instabil in seinem Regelverhalten wird.

Auch ist es zweckmäßig, wenn der Regler eine Verstärkung, vorteilhaft die maximal mögliche Steigung als Verstärkung wählt, ohne dass das Regelsystem instabil wird.

Weitere Vorteile ergeben sich aus der nachfolgenden Figurenbeschreibung und aus den Unteransprüchen.

### Kurze Beschreibung der Zeichnungen

Nachstehend wird die Erfindung auf der Grundlage eines Ausführungsbeispiels anhand der Zeichnungen näher erläutert. Es zeigen:
- Fig. 1: eine Vorrichtung zur Durchflussmessung von flüssigem Metall insbesondere in einer Gießanlage,
- Fig. 2: ein Blockschaltbild,
- Fig. 3: ein Blockschaltbild, und
- Fig. 4: eine Kennlinie einer Darstellung des Massenstroms als Funktion der Stopfenposition.

### Bevorzugte Ausführung der Erfindung

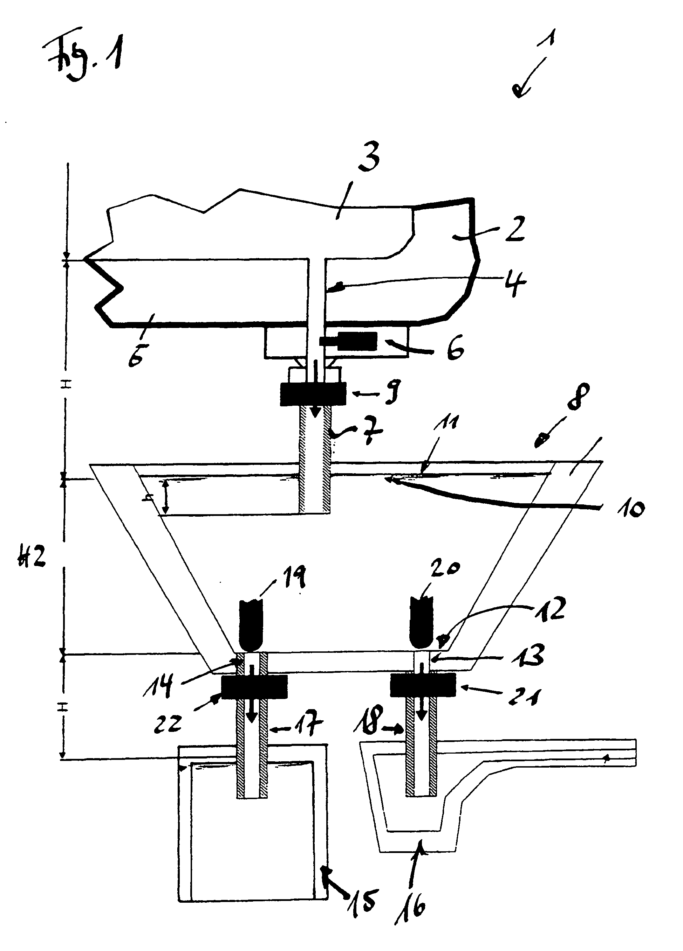

Die Figur 1 zeigt schematisch eine Vorrichtung 1 zur Messung des Durchflusses von flüssigem, heißem Metall oder einer metallischen Schmelze in einer Gießanlage. Dazu weist die Vorrichtung 1 ein erstes Gefäß 2 auf, welches vorteilhaft als Pfanne ausgebildet ist. Dieses erste Gefäß 2 weist eine Schmelze bzw. eine Menge flüssigen Metalls 3 auf. Das erste Gefäß 2 ist nur schematisch und ausschnittweise dargestellt. Es weist eine Abflussöffnung 4 auf, durch welche das flüssige Metall 3 abfließen kann, wobei die Abflussöffnung 4 vorteilhaft am Boden 5 des ersten Gefäßes 2 angeordnet ist. Zur Steuerung des Abflusses des flüssigen Metalls 3 durch den Abfluss 4, ist ein Steuerelement 6, wie beispielsweise ein Schieber, vorgesehen, der vorteilhaft von einer nicht näher dargestellten Steuereinrichtung ansteuerbar ist. Von der Abflussöffnung 4 aus führt ein Schattenrohr 7 zu einem zweiten Gefäß 8 nach unten und ragt in dieses zweite Gefäß 8 von oben ein. Das flüssige Metall 3 strömt durch das Schattenrohr 7, sofern das Steuerelement 6 dies erlaubt, und strömt in das zweite Gefäß 8 von oben ein. Zur Detektion des Durchflusses des flüssigen Metalls 3 durch das Schattenrohr 7 ist bei einem Ausführungsbeispiel der Erfindung ein Sensor 9 vorgesehen, welcher die durch das Schattenrohr 7 fließende Menge des flüssigen Metalls 3 pro Zeiteinheit detektiert und ein Signal generiert, welches proportional zur Durchflussmenge oder der Durchflussmenge pro Zeiteinheit ist.

Das zweite Gefäß 8 ist in der Figur 1 bis zu der Füllstandshöhe 10 gefüllt. Dabei ist die Füllstandshöhe H2 die Höhe des Spiegels 11 der Oberfläche der Schmelze bis zu dem Boden 12 des zweiten Gefäßes 8. Dabei ist weiterhin die Höhe h der Abstand zwischen dem unteren Ende des Schattenrohrs 7 und der Oberfläche der Schmelze 11.

Das zweite Gefäß 8 weist an seinem Boden 12 vorzugsweise zumindest eine Abflussöffnung 13, vorteilhafter Weise jedoch zwei Abflussöffnungen 13,14 oder auch mehr als zwei Abflussöffnungen 13,14 auf. Durch diese Abflussöffnungen 13,14 kann das flüssige Metall 3 in zumindest eine der nachfolgenden Kokillen 15 oder Gefäßen16 strömen. Dazu ist mit der jeweiligen Abflussöffnung 13,14 jeweils ein Tauchrohr 17,18 verbunden, welches an seinem unteren Ende in die zumindest eine Kokille 15 oder in das zumindest eine weitere Gefäß 16 von oben aus ragt. Zur Steuerung des Durchflusses durch die Abflussöffnungen bzw. durch die Tauchrohre 17,18 sind Steuerelemente 19,20, wie beispielsweise Stopfen, vorgesehen, mittels welchen durch Öffnen und Schließen bzw. durch Einstellung einer Zwischenstellung der freie Querschnitt der Abflussöffnung gesteuert werden kann, so dass damit der Durchfluss gesteuert werden kann. Die Steuerung erfolgt auch hier wieder mittels einer nicht näher dargestellten Steuereinrichtung.

Zur Detektion des Durchflusses durch die Tauchrohre sind vorteilhaft Sensoren 21,22 vorgesehen, welche den Durchfluss des flüssigen Metalls 3 durch das jeweilige Tauchrohr 17,18 detektieren.

Wie bei der Detektierung des Durchflusses des flüssigen Metalls 3 durch das Schattenrohr 7 mittels des Sensors 9 erfolgt die Detektierung des Durchflusses des flüssigen Metalls 3 durch die Tauchrohre 17,18 mittels der Sensoren 21,22 unterhalb des jeweiligen Gefäßes 2,8. Es wird somit unterhalb der entsprechenden metallurgischen Gefäße 2,8, wie Pfanne und Zwischenbehälter, an Schattenrohren und an Tauchrohren oder anderen metall- bzw. stahldurchflossenen Anlagenkomponenten der Durchfluss des flüssigen Metalls 3 direkt gemessen. Dabei kann vorteilhaft nicht nur die Durchflussmenge des flüssigen Metalls 3 detektiert werden, sondern es kann durch die Steuerung der Steuerelemente sowohl der Gießspiegel als auch die Produktdicke beeinflusst werden.

Darüber hinaus können mittels der Sensoren auch Fremdstoffe, wie beispielsweise Schlacke, in der Metallschmelze bzw. im flüssigen Stahl detektiert werden und der Steuerung als Signal zugeführt werden.

Weiterhin können auch Temperaturänderungen in der Metallschmelze detektiert werden und der Steuerung als Signal zugeführt werden.

Zur schnellen und direkten Detektion der Durchflussmenge des flüssigen Metalls 3 ist es vorteilhaft, wenn der zumindest eine Sensor 9,21,22 in der unmittelbaren Nähe zu dem zumindest einen Steuerelement 6,19,20 angeordnet ist, damit die Verzögerungszeit und damit Totzeit zwischen der Position des Steuerelements und der Position der Durchflussmessung möglichst gering gehalten ist. Die Regelstrecke zur Steuerung des Durchflusses in einer Gießanlage verwendet vorteilhaft schnell reagierende Steuerelemente 6,19,20, die ohne große Verzögerung die angesteuerte Einstellung annehmen können. Wenn die Sensoren zur Messung des Durchflusses direkt unterhalb des Steuerelements 6,19,20, wie Schieber oder Stopfen, positioniert sind, weist das Messsignal der zu regelnden Größe eine sehr geringe Totzeit auf. Mit diesem Messsignal kann dann eine sehr exakte Steuerung oder Regelung des Massenstromes bzw. Durchflusses realisiert werden und somit können Ausbringungsverluste reduziert oder gar vermieden werden. Darüber hinaus kann eine erhöhte Produktqualität erzielt werden.

Die Sensoren 9,21,22 können bei einem bevorzugten Ausführungsbeispiel der Erfindung auf dem Messprinzip der Messung der Geschwindigkeit bzw. des Durchflusses des metallischen Materials mittels einer Lorentzkraft beruhen. Solche Sensoren sind durch die WO 2007/033982 A1 bekannt geworden.

Durch die Kenntnis der momentanen Durchflussmenge, wie insbesondere aufgrund des oben beschriebenen Verfahrens ist es möglich, zwei grundlegende Wege einer Optimierung der Niveauregulierung zu erzielen.

Während des Gießvorganges verändert sich durch das sogenannte Clogging und/oder durch Erosion die Kontur zwischen Stopfen als Steuerelement und dem diesbezüglichen Stopfensitz. Bei anderen Steuerelementen verhält sich der Einfluss von Clogging und/oder Erosion im Wesentlichen vergleichbar, so dass hier nicht weiter darauf eingegangen werden muss. Dadurch verändert sich aber insbesondere die Relation zwischen der Stopfenposition, also der Position des Stopfens relativ zum Stopfensitz, und Durchflussmenge bei ansonsten gleich bleibenden Randbedingungen. Dieser Effekt stellt daher eine nicht direkt erfassbare Störgröße für die Niveauregulierung dar. Durch Kenntnis der momentanen Durchflussmenge und der Stopfenposition kann die Relation zwischen diesen beiden Größen jedoch erfasst werden und es kann deren zeitliche Änderung über die Steuerung und/oder Regelung kompensiert werden, in dem eine passender Algorithmus angewendet wird bzw. entsprechende Parameter entsprechend an die sich ergebende Relation angepasst werden.

Weiterhin kann eine Verringerung der Totzeit des Systems erfolgen. Die Änderung der Stopfenposition ruft eine Änderung der Durchflussmenge hervor. Bisher wird die Änderung der Durchflussmenge nur indirekt über die Messung des Flüssigmetallspiegelniveaus gemessen. Diese Messung ist aber stark totzeitbehaftet. Da die Durchflussmessung entsprechend der vorliegenden Erfindung direkt unterhalb des Steuerelements bzw. des Stopfens erfolgt, kann hier mit einer wesentlich geringeren Totzeit gesteuert oder geregelt werden. Darüber hinaus sind die Messfehler auch geringer, da eine direkte Messung. des Durchflusses durchgeführt wird.

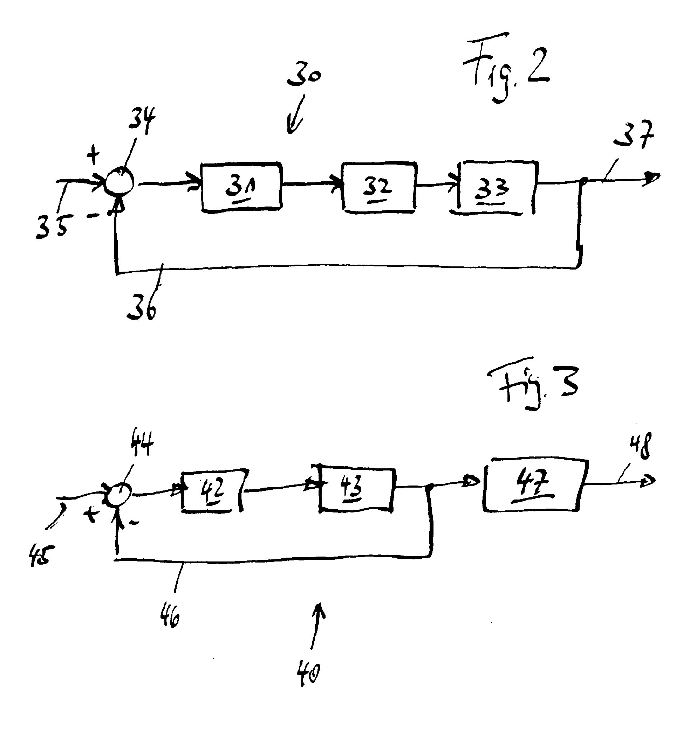

Durch die Ausnutzung der Veränderung der Relation der Regelstrecke und der Änderung der Totzeit des Systems kann vorteilhaft eine Kompensation der Totzeit im Regelalgorithmus durchgeführt werden. Es wird dadurch eine vollständige mathematische Beschreibung des Regelsystems ermöglicht. Hierdurch lässt sich die Totzeit für das Regelsystem analytisch kompensieren, d. h. es kann ein Regler für ein Regelsystem ohne Totzeit entwickelt werden, siehe Figur 2. Die Figur 2 zeigt ein Diagramm eines Regelkreises 30, bei welchem ein Eingangssignal 35 auf einen Addierer 34 gegeben wird. Das Eingangssignal abzüglich des zurückgeführten Signals 36 ist das Eingangssignal des Totzeitglieds 31. Der Ausgang von Block 31 wird dem Eingang des Reglers 32 zugeführt, wobei der Ausgang des Reglers 32 der Regelstrecke 33 zugeführt wird, wobei das Ausgangssignal 37 als zurückgeführtes Signal 36 dem Addierer wieder mit negativem Vorzeichen zugeführt wird. Der Regler 32 ist vorzugsweise ein Flüssigkeitsspiegelregler. Die Regelstrecke 33 beschreibt bzw. beinhaltet der Flüssigmetallspiegel des Systems.

Bei Kenntnis der Totzeit kann die Totzeit als ein der Regelung nachgelagertes System bzw. ein nachgelagerter Block abgebildet werden, wie beispielsweise bei einem Smith-Prädiktor. Dies ist in Figur 3 zu erkennen. Die Figur 3 zeigt abweichend zu Figur 2 ein Diagramm eines Regelkreises 40, bei welchem ein Eingangssignal 45 auf einen Addierer 44 gegeben wird. Das Eingangssignal 45 abzüglich des zurückgeführten Signals 46 ist das Eingangssignal des Reglers 42, wobei der Ausgang des Reglers 42 der Regelstrecke 43 zugeführt wird. Das Ausgangssignal der Regelstrecke wird als zurückgeführtes Signal 46 dem Addierer 44 wieder mit negativem Vorzeichen zugeführt. Der Regelstrecke 43 nachgelagert ist das Totzeitglied 47 aufgrund der zuvor bestimmten Totzeit, wobei das Ausgangssignal 48 des Systems das Ausgangssignal des Totzeitglieds ist. Der Regler 42 ist vorzugsweise ein adaptierter Flüssigkeitsspiegelregler mit Totzeitkompensation durch ein Prozessmodell. Die Regelstrecke 43 beschreibt bzw. beinhaltet der Flüssigmetallspiegel des Systems.

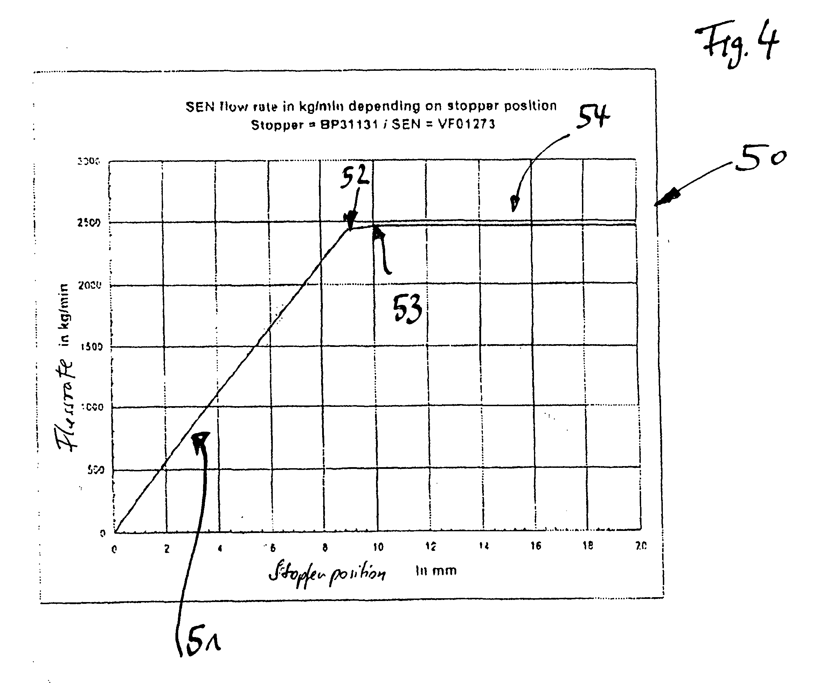

Die Figur 4 zeigt schematisch eine Kennlinie 50 des Massenstroms der Stahlmenge, die das Gießrohr bzw. das Tauchrohr durchströmt, als Funktion der Stopfenposition. Als Stopfen sind hier die Steuerelemente, wie auch Stopfen 19 und 20 der Figur 1 beispielhaft gemeint, wobei als Gießrohr durchaus die Tauchrohre 17,18 der Figur 1 gemeint sein können. Die Kennlinie zeigt in einem ersten Bereich 51 ein lineares Verhalten mit einem linearen Anstieg der Flussrate als Funktion der Stopfenposition. Bis zu dem Punkt 52 steigt somit die Flussrate an, wenn die Stopfenposition ansteigt. Ab Punkt 52 weicht die Flussrate von dem linearen Verhalten ab und geht in eine Horizontale über. Dies bedeutet, dass ab etwa Punkt 53 im Bereich 54 die Flussrate unabhängig von der Stopfenposition ist.

Erfindungsgemäß ist es vorteilhaft, wenn eine Minimierung der Ausregelzeit der bestehenden Gießspiegelregelung durchgeführt wird, indem die Kenntnis der aktuellen Stopfenposition des zumindest einen Stopfens 19,20 und/oder beider Stopfen zur Regelung herangezogen wird. Dabei ist es auch vorteilhaft, wenn die Kenntnis der aktuellen Stopfenverstärkung herangezogen wird.

Durch die Messung der Durchflussmenge kann vorteilhaft zu jedem Zeitpunkt und insbesondere auch unabhängig von einer Erosion und einem so genannten Clogging, der ebenso messbaren bzw. einstellbaren Stopfenposition ein Massenstrom der Stahlmenge, die das Gießrohr (SEN) durchströmt, zugeordnet werden. Dabei bedeutet die Erosion einen Abtrag von feuerfestem Material im Bereich des Stopfensteins, was die Stopfenkennlinie beeinflusst. Weiterhin bedeutet dabei Clogging das Abscheidungen von Material im Bereich des Stopfens oder des Gießrohres, was zu einem veränderten Querschnitt insbesondere des Gießrohrs führt und dadurch anderer Massenstrom resultiert. Die Stopfenkennlinie ist dabei die Funktion von Massenstrom über der Stopfenposition, also der Massenstrom, als Funktion der Stopfenposition. Die Stopfenverstärkung ist der für den jeweiligen Arbeitspunkt geltende lineare Zusammenhang zwischen Massenstrom und Stopfenposition. Die Verstärkung ist somit zumindest proportional der Steigung bzw. kann auch gleich der Steigung der Kennlinie sein.

Aus den Daten von Massenstrom und Stopfenposition kann daher vorteilhaft die bisher vorhandene Stopfenkennlinie möglichst fortlaufend oder zumindest zeitweise aktualisiert werden.

Der Gießspiegelregler regelt dabei mit der eingestellten Verstärkung den Massenstrom. Eine zu große Verstärkung kann zu Instabilitäten des Regelsystems bzw. des Regelkreises führen. Daher wird vorteilhaft eher mit einer kleineren oder mit einer kleinen Verstärkung gearbeitet. Dabei kann es vorteilhaft sein, dass die Verstärkung derart gewählt wird, dass auch in einem extremen Fall, bei welchem mit einer ungünstigsten Stopfenkennlinie mit einer großen Stopfenverstärkung gearbeitet wird, das System bzw. der Regelkreis keine Instabilität zeigt. Diese Einstellung des Reglersystems hat eine entsprechend lange Ausregelzeit zur Folge. Wenn man die aktuelle Stopfenkennlinie und damit die aktuelle Stopfenverstärkung kennt, kann man die im Moment größte mögliche Verstärkung für den Gießspiegelregler wählen, die noch stabil arbeitet. Dies bedeutet eine wesentlich kürzere Ausregelzeit als im ansonsten ungünstigsten Betriebsfall.

Dabei ist aus einem Ausführungsbeispiel folgendes Zahlenbeispiel herausgearbeitet worden: Bei einer Änderung der Stopfenposition von der Position bei 4 mm auf die Position bei 6 mm beträgt die Stopfenverstärkung ca. 500 kg/min für die 2 mm Positionsänderung. Das bedeutet, dass von Position 4 mm ca. 1100 kg/min detektiert wird und bei Position 6 mm die Flussrate ca. 1600 kg/min beträgt, wohin gegen die Stopfenverstärkung für die 2 mm Veränderung ca. 250kg/(min*mm) beträgt.

Bei einer Änderung der Stopfenposition von der Position bei 14 mm auf die Position bei 16 mm beträgt die Stopfenverstärkung ca. 0 kg/min für die 2 mm Positionsänderung. Das bedeutet, dass von Position 14 mm ca. 2400 kg/min detektiert wird und bei Position 16 mm die Flussrate auch ca. 2400 kg/min beträgt, wohin gegen die Stopfenverstärkung für die 2 mm Veränderung etwa 0kg/(min*mm) beträgt, d. h. die Verstärkung bzw. die Steigung ist in diesem Falle Null.

### Bezugszeichenliste

- 1: Vorrichtung
- 2: erstes Gefäß
- 3: Metallschmelze, flüssiges Metall
- 4: Abfluss, Abflussöffnung
- 5: Boden des ersten Gefäßes
- 6: Steuerelement, Schieber
- 7: Schattenrohr
- 8: zweites Gefäß
- 9: Sensor
- 10: Füllstandshöhe
- 11: Spiegel
- 12: Boden des zweiten Gefäßes
- 13: Abfluss, Abflussöffnung
- 14: Abfluss, Abflussöffnung
- 15: Kokille
- 16: Kokille / Gefäß
- 17: Tauchrohr
- 18: Tauchrohr
- 19: Steuerelement, Stopfen
- 20: Steuerelement, Stopfen
- 21: Sensor
- 22: Sensor
- 30: Regelkreis
- 31: Totzeitglied
- 32: Regler
- 33: Regelstrecke
- 34: Addierer
- 35: Eingangssignal
- 36: Rückgeführtes Signal
- 37: Ausgangssignal
- 40: Regelkreis
- 42: Regler
- 43: Regelstrecke
- 44: Addierer
- 45: Eingangssignal
- 46: Rückgeführtes Signal
- 47: Totzeitglied
- 48: Ausgangssignal
- 50: Kennlinie
- 51: Bereich
- 52: Punkt
- 53: Punkt
- 54: Bereich

## Patentansprüche

1. Vorrichtung (1) zur Messung des Durchflusses von flüssigem Metall, mit einem ersten Gefäß (2) und mit einem zweiten Gefäß (8), wobei das flüssige Metall (3) in dem ersten Gefäß (2) bereit gestellt wird und über ein Schattenrohr (7) in das zweite Gefäß (8) strömt, wobei das flüssige Metall (3) in dem zweiten Gefäß (8) zwischengespeichert wird und über zumindest ein erstes Tauchrohr (17,18) in eine Kokille oder ein weiteres Gefäß (15,16) strömt, **dadurch gekennzeichnet, dass** die Durchflussmenge des flüssigen Metalls (3) durch das Schattenrohr (7) und/oder das zumindest eine Tauchrohr (17,18) durch zumindest einen unterhalb des jeweiligen Gefäßes (2,8) angeordneten Sensor (9,21,22) detektierbar ist.

2. Vorrichtung nach Anspruch 1, **dadurch gekennzeichnet, dass** zur Steuerung oder Regelung des Durchflusses ein Steuerelement (6,19,20) dem jeweiligen Tauchrohr (17,18) oder Schattenrohr (7) zugeordnet ist.

3. Vorrichtung nach Anspruch 2, **dadurch gekennzeichnet, dass** der zumindest eine Sensor (9,21,22) unterhalb des zumindest einen jeweiligen Steuerelements (6,19,20) angeordnet ist.

4. Vorrichtung nach einem der vorhergehenden Ansprüche, **dadurch gekennzeichnet, dass** das zweite Gefäß (8) unterhalb des ersten Gefäßes (2) angeordnet ist und das Schattenrohr (7) von dem Abfluss des ersten Gefäßes (2) von oben In das zweite Gefäß (8) ragt.

5. Vorrichtung nach einem der vorhergehenden Ansprüche, **dadurch gekennzeichnet, dass** die Kokille oder das weitere Gefäß (15,16) unterhalb des zweiten Gefäßes (8) angeordnet ist und das Tauchrohr (17,18) von dem Abfluss des zweiten Gefäßes (8) von oben in die Kokille oder das weitere Gefäß (15,16) ragt.

6. Vorrichtung nach einem der vorhergehenden Ansprüche, **dadurch gekennzeichnet, dass** eine Steuerung oder Regelung vorgesehen ist, mittels welcher auf Basis der Signale des zumindest einen Sensors (9,21,22) das zumindest eine Steuerelement (6,19,20) angesteuert wird, so dass ein im Wesentlichen gleichmäßiger Füllstand des ersten Gefäβes (2) und/oder des zweiten Gefäβes (8) und/oder ein gleichmäßiger Füllstand in der Kokille (15) oder in dem weiteren Gefäβ (16) sowie eine gleichmäßige Produktdicke resultieren.

7. Verfahren zur Steuerung oder Regelung eines Füllstands zumindest eines Gefäßes mit flüssigem Metall in einer Vorrichtung mit einem ersten Gefäß (2) und mit einem zweiten Gefäß (8), wobei das flüssige Metall (3) in dem ersten Gefäß (2) bereit gestellt wird und über ein Schattenrohr (7) in das zweite Gefäß (8) strömt, und das flüssige Metall (3) in dem zweiten Gefäß (8) zwischengespeichert wird und über zumindest ein erstes Tauchrohr (17,18) in eine Kokille oder ein weiteres Gefäß (15,16) strömt, wobei weiterhin die Durchflussmenge des flüssigen Metalls (3) durch das Schattenrohr (7) und/oder durch das zumindest eine Tauchrohr (17,18) mittels zumindest eines unterhalb des jeweiligen Gefäßes (2,8) angeordneten Sensors (9,21,22) detektiert wird, und wobei auf Basis zumindest eines Signals des zumindest einen Sensors (9,21,22) zumindest ein Steuerelement (6,19,20) angesteuert wird, so dass ein im Wesentlichen gleichmäßiger Füllstand des ersten und/oder zweiten Gefäßes (2,8) und/oder ein im Wesentlichen gleichmäßiger Füllstand in der Kokille (15) oder in dem weiteren Gefäß (16) sowie eine im Wesentlichen gleichmäßige Produktdicke resultieren.

8. Verfahren nach Anspruch 7, **dadurch gekennzeichnet, dass** zur Steuerung oder Regelung des Durchflusses ein Steuerelement (8,19,20) dem jeweiligen Tauchrohr (17,18) oder Schattenrohr (7) zugeordnet ist.

9. Verfahren nach Anspruch 8, **dadurch gekennzeichnet, dass** der zumindest eine Sensor (9,21,22) unterhalb zumindest eines Steuerelements (6,19,20) angeordnet ist.

10. Verfahren nach einem der vorhergehenden Ansprüche 7 bis 9, **dadurch gekennzeichnet, dass** das zweite Gefäß (8) unterhalb des ersten Gefäßes (2) angeordnet ist und das Schattenrohr (7) von dem Abfluss des ersten Gefäßes (2) von oben In das zweite Gefäß (8) ragt.

11. Verfahren nach einem der vorhergehenden Ansprüche 7 bis 10, **dadurch gekennzeichnet, dass** das die Kokille oder das weitere Gefäß (15,16) unterhalb des zweiten Gefäßes (8) angeordnet sind und das Tauchrohr (17,18) von dem Abfluss des zweiten Gefäßes (8) von oben In die Kokille oder das weitere Gefäβ (16,16) ragt.

12. Verfahren nach einem der vorhergehenden Ansprüche, **dadurch gekennzeichnet, dass** die Ausregelzeit des Regelsystems dadurch minimiert wird, dass die Steigung der Kennlinie des Massenstroms als Funktion der Position des Steuerelements bestimmt wird.

13. Verfahren nach Anspruch 12 **dadurch gekennzeichnet, dass** der Regler eine Verstärkung, vorteilhaft die maximal mögliche Steigung der Kennlinie als Verstärkung wählt, ohne dass das Regelsystem instabil wird.

## Claims

1. Device (1) for measuring throughflow of liquid metal, comprising a first vessel (2) and a second vessel (8), wherein the liquid metal (3) is provided in the first vessel (2) and flows into the second vessel (8) by way of a shroud pipe (7) and wherein the liquid metal (3) is intermediately stored in the second vessel (8) and flows into a mould or a further vessel (15, 16) by way of at least one first immersion pipe (17, 18), **characterised in that** the throughflow quantity of the liquid metal (3) through the at least one shroud pipe (7) and/or the immersion pipe (17, 18) is detectable by at least one sensor (9, 21, 22) arranged below the respective vessel (2, 8).

2. Device according to claim 1, **characterised in that** a control element (6, 19, 20) for control or regulation of the throughflow is associated with the respective immersion pipe (17, 18) or shroud pipe (7).

3. Device according to claim 2, **characterised in that** the at least one sensor (9, 21, 22) is arranged below the at least one respective control element (6, 19, 20).

4. Device according to any one of the preceding claims, **characterised in that** the second vessel (8) is arranged below the first vessel (2) and the shroud pipe (7) projects from the outlet of the first vessel (2) into the second vessel (8) from above.

5. Device according to any one of the preceding claims, **characterised in that** the mould or the further vessel (15, 16) is arranged below the second vessel (8) and the immersion pipe (17, 18) projects from the outlet of the second vessel (8) into the mould or the further vessel (15, 16) from above.

6. Device according to any one of the preceding claims, **characterised in that** a control or regulation is provided by means of which the at least one control element (6, 19, 20) is activated on the basis of the signals of the at least one sensor (9, 21, 22) so that a substantially uniform filling state of the first vessel (2) and/or the second vessel (8) and/or a substantially uniform filling state in the mould (15) or in the further vessel as well as a uniform product thickness result.

7. Method of controlling or regulating a filling state of at least one vessel with liquid metal in a device comprising a first vessel (2) and a second vessel (8), wherein the liquid metal (3) is provided in the first vessel (2) and flows into the second vessel (8) by way of a shroud pipe (7) and the liquid metal (3) is intermediately stored in the second vessel (8) and flows into a mould or a further vessel (15, 16) by way of at least one first immersion pipe (17, 18), wherein the throughflow quantity of the liquid metal (3) through the at least one shroud pipe (7) and/or through the at least one immersion pipe (17, 18) is detected by means of at least one sensor (9, 21, 22) arranged below the respective vessel (2, 8), and wherein at least one control element (6, 19, 20) is activated on the basis of at least one signal of at least one sensor (9, 21, 22) so that a substantially uniform filling state of the first and/or second vessel (2, 8) and/or a substantially uniform filling state in the mould (15) or in the further vessel (16) as well as substantially uniform product thickness result.

8. Method according to claim 7, **characterised in that** a control element (6, 19, 20) for control or regulation of the throughflow is associated with the respective immersion pipe (17, 18) or shroud pipe (7).

9. Method according to claim 8, **characterised in that** the at least one sensor (9, 21, 22) is arranged below at least one control element (6, 19, 20).

10. Method according to any one of the preceding claims 7 to 9, **characterised in that** the second vessel (8) is arranged below the first vessel (2) and the shroud pipe (7) projects from the outlet of the first vessel (2) into the second vessel (8) from above.

11. Method according to any one of the preceding claims 7 to 10, **characterised in that** the mould or the further vessel (15, 16) is arranged below the second vessel (8) and the immersion pipe (17, 18) projects from the outlet of the second vessel (8) from above into the mould (15, 16) or the further vessel (15, 16).

12. Method according to any one of the preceding claims, **characterised in that** the settle time of the regulating system is minimised **in that** the slope of the plot of the mass flow is determined as a function of the position of the control element.

13. Method according to claim 12, **characterised in that** the regulator selects an amplification, advantageously the maximum possible slope of the plot as amplification, without the regulating system being unstable.

## Revendications

1. Dispositif (1) pour la mesure du débit d'un métal liquide, comprenant une première cuve (2) et une deuxième cuve (8), le métal liquide (3) étant préparé dans la première cuve (2) pour s'écouler via un tube de protection contre le jet de coulée (7) dans la deuxième cuve (8), le métal liquide (3) étant soumis à un stockage intermédiaire dans la deuxième cuve (8) et s'écoulant via au moins un premier tube plongeur (17, 18) dans une coquille ou dans une cuve supplémentaire (15, 16), **caractérisé en ce que** le débit du métal liquide (3) peut être détecté à travers le tube de protection contre le jet de coulée (7) et/ou à travers ledit au moins un tube plongeur (17, 18) via au moins un capteur (9, 21, 22) disposé en dessous de la cuve respective (2, 8).

2. Dispositif selon la revendication 1, **caractérisé en ce que**, pour la commande ou le réglage du débit, on attribue un élément de commande (6, 19, 20) au tube plongeur (17, 18) ou au tube de protection contre le jet de coulée (7) respectivement.

3. Dispositif selon la revendication 2, **caractérisé en ce que** ledit au moins un capteur (9, 21, 22) est disposé en dessous dudit au moins un élément de commande respectif (6, 19,20).

4. Dispositif selon l'une quelconque des revendications précédentes, **caractérisé en ce que** la deuxième cuve (8) est disposée en dessous de la première cuve (2) et le tube de protection contre le jet de coulée (7), à partir de la sortie de la première cuve (2), fait saillie à partir du haut dans la deuxième cuve (8).

5. Dispositif selon l'une quelconque des revendications précédentes, **caractérisé en ce que** la coquille ou la cuve supplémentaire (15, 16) est disposée en dessous de la deuxième cuve (8) et le tube plongeur (17, 18), à partir de la sortie de la deuxième cuve (8), fait saillie à partir du haut dans la coquille ou dans la cuve supplémentaire (15, 16).

6. Dispositif selon l'une quelconque des revendications précédentes, **caractérisé en ce qu'**on prévoit une commande ou un réglage au moyen de laquelle ou duquel on excite, sur base des signaux dudit au moins un capteur (9, 21, 22) ledit au moins un élément de commande (6, 19, 20), si bien que l'on obtient un niveau de remplissage de la première cuve (2) et/ou de la deuxième cuve (8) essentiellement uniforme et/ou un niveau de remplissage uniforme dans la coquille (15) ou dans la cuve supplémentaire (16), ainsi qu'une épaisseur de produit uniforme.

7. Procédé pour la commande ou le réglage d'un niveau de remplissage d'au moins une cuve avec du métal liquide dans un dispositif comprenant une première cuve (2) et une deuxième cuve (8), le métal liquide (3) étant préparé dans la première cuve (2) pour s'écouler via un tube de protection contre le jet de coulée (7) dans la deuxième cuve (8), et le métal liquide (3) étant soumis à un stockage intermédiaire dans la deuxième cuve (8) et s'écoulant via au moins un premier tube plongeur (17, 18) dans une coquille ou dans une cuve supplémentaire (15, 16), dans lequel en outre le débit du métal liquide (3) peut être détecté à travers le tube de protection contre le jet de coulée (7) et/ou à travers ledit au moins un tube plongeur (17, 18) via au moins un capteur (9, 21, 22) disposé en dessous de la cuve respective (2, 8), et dans lequel sur base d'au moins un signal dudit au moins un capteur (9, 21, 22) au moins un élément de commande (6, 19, 20) est excité, si bien que l'on obtient un niveau de remplissage de la première cuve (2) et/ou de la deuxième cuve (8) essentiellement uniforme et/ou un niveau de remplissage essentiellement uniforme dans la coquille (15) ou dans la cuve supplémentaire (16), ainsi qu'une épaisseur de produit essentiellement uniforme.

8. Procédé selon la revendication 7, **caractérisé en ce que**, pour la commande ou le réglage du débit, on attribue un élément de commande (6, 19, 20) au tube plongeur (17, 18) ou au tube de protection contre le jet de coulée (7) respectivement.

9. Procédé selon la revendication 8, **caractérisé en ce que** ledit au moins un capteur (9, 21, 22) est disposé en dessous d'au moins un élément de commande respectif (6, 19, 20).

10. Procédé selon l'une quelconque des revendications 7 à 9, **caractérisé en ce que** la deuxième cuve (8) est disposée en dessous de la première cuve (2) et le tube de protection contre le jet de coulée (7), à partir de la sortie de la première cuve (2), fait saillie à partir du haut dans la deuxième cuve (8).

11. Procédé selon l'une quelconque des revendications 7 à 10, **caractérisé en ce que** la coquille ou la cuve supplémentaire (15, 16) est disposée en dessous de la deuxième cuve (8) et le tube plongeur (17, 18), à partir de la sortie de la deuxième cuve (8), fait saillie à partir du haut dans la coquille ou dans la cuve supplémentaire (15, 16).

12. Procédé selon l'une quelconque des revendications précédentes, **caractérisé en ce qu'**on minimise le temps de réglage du système de réglage par le fait de déterminer l'élévation de la courbe caractéristique du courant massique en fonction de la position de l'élément de commande.

13. Procédé selon la revendication 12, **caractérisé en ce que** le dispositif de réglage sélectionne à titre de renforcement, un renforcement, de manière avantageuse l'élévation maximale possible de la courbe caractéristique, sans rendre le système de réglage instable.
